# EUROPEAN PATENT SPECIFICATION

(11) **EP 3 392 484 B1**
(45) Date of publication and mention of the grant of the patent: **11.01.2023**
(21) Application number: 18168164.4
(22) Date of filing: 19.04.2018
(51) Int. Cl.: F02C 7/04, F02C 7/057

(54) **SYSTEM AND METHOD FOR REGULATING FLOW IN TURBOMACHINES**
SYSTEM UND VERFAHREN ZUR REGULIERUNG DES DURCHFLUSSES IN EINER TURBOMASCHINE
SYSTÈME ET PROCÉDÉ DE RÉGULATION DU DÉBIT DANS UNE TURBOMACHINE

(30) Priority: 20.04.2017 US 201715492505
(43) Date of publication of application: 24.10.2018
(73) Proprietor: General Electric Company, Schenectady, NY 12345 (US)
(72) Inventor: KIPPEL, Bradly Aaron, Greenville, SC 29615 (US); FRESE, Christopher Conrad, Greenville, SC 29615 (US)
(74) Representative: Novagraaf Group

(56) References cited:
- EP-A2- 2 072 794
- US-A1- 2007 294 984
- US-A1- 2013 276 458

## Description

### FIELD

The present disclosure generally relates to turbomachines. More particularly, the present disclosure relates systems and methods for regulating the flow of air into turbomachines.

### BACKGROUND

A gas turbine engine generally includes an inlet section, a compressor section, a combustion section, a turbine section, and an exhaust section. Air enters the gas turbine engine through the inlet section. The compressor section progressively increases the pressure of the air and supplies this compressed air to the combustion section. The compressed air and a fuel (e.g., natural gas) mix within the combustion section and burn in a combustion chamber to generate high pressure and high temperature combustion gases. The combustion gases flow from the combustion section into the turbine section where they expand to produce work. For example, expansion of the combustion gases in the turbine section may rotate a rotor shaft connected to a generator to produce electricity. The combustion gases then exit the gas turbine via the exhaust section.

In some instances, the inlet section may include one or more weather hoods. More specifically, the weather hoods cause the air ingested by the gas turbine engine to flow upward as it enters the inlet section. This may reduce the amount of rain, snow, and other precipitation entering the gas turbine engine. Unfortunately, however, the upward flow reduces the efficiency of the gas turbine engine when precipitation is not present because the directional change in airflow results in a pressure loss. US 2013/276458 A1 discloses a gas turbomachine inlet system that includes a duct member having a throttling system that is configured and disposed to selectively establish a pressure drop through a fluid flow zone. EP 2072794 A2 discloses a prime mover for an exhaust gas recirculation (EGR) system and a method of operating the same.

### BRIEF DESCRIPTION

Aspects and advantages of the technology will be set forth in part in the following description, or may be obvious from the description, or may be learned through practice of the technology.

In one embodiment according to the invention, the present disclosure is directed to a system for regulating a flow of air into a turbomachine as claimed in claim 1.

In another embodiment according to the invention, the present disclosure is directed to a method for regulating a flow of air into a turbomachine as defined in claim 12.

These and other features, aspects and advantages of the present technology will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present technology, directed to one of ordinary skill in the art, is set forth in the specification, which makes reference to the appended figures, in which:
FIG. 1 is a schematic view of an exemplary gas turbine engine in accordance with embodiments of the present disclosure;
FIG. 2 is a side view of an exemplary inlet section of the gas turbine engine in accordance with embodiments of the present disclosure;
FIG. 3 is a side view of an exemplary damper in accordance with embodiments of the present disclosure;
FIG. 4 is schematic view of a system for regulating a flow of air into a gas turbine engine in accordance with embodiments of the present disclosure;
FIG. 5 is a side view of the damper, illustrating a restriction in a self-cleaning position in accordance with embodiments of the present disclosure;
FIG. 6 is a side view of the damper, illustrating a restriction in a weather protection position in accordance with embodiments of the present disclosure;
FIG. 7 is a side view of the damper, illustrating a restriction in a turndown position in accordance with embodiments of the present disclosure;
FIG. 8 is a side view of the damper, illustrating a restriction in a shutdown position in accordance with embodiments of the present disclosure; and
FIG. 9 is flow chart illustrating a method for regulating a flow of air into a gas turbine engine in accordance with embodiments of the present disclosure.

Repeat use of reference characters in the present specification and drawings is intended to represent the same or analogous features or elements of the present technology.

### DETAILED DESCRIPTION

Reference will now be made in detail to present embodiments of the technology, one or more examples of which are illustrated in the accompanying drawings. The detailed description uses numerical and letter designations to refer to features in the drawings. Like or similar designations in the drawings and description have been used to refer to like or similar parts of the technology. As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows.

Each example is provided by way of explanation of the technology, not limitation of the technology. In fact, it will be apparent to those skilled in the art that modifications and variations can be made in the present technology without departing from the scope thereof.

Although an industrial or land-based gas turbine is shown and described herein, the present technology as shown and described herein is not limited to a land-based and/or industrial gas turbine unless otherwise specified in the claims. For example, the technology as described herein may be used in any type of turbomachine including, but not limited to, aviation gas turbines (e.g., turbofans, etc.), steam turbines, and marine gas turbines.

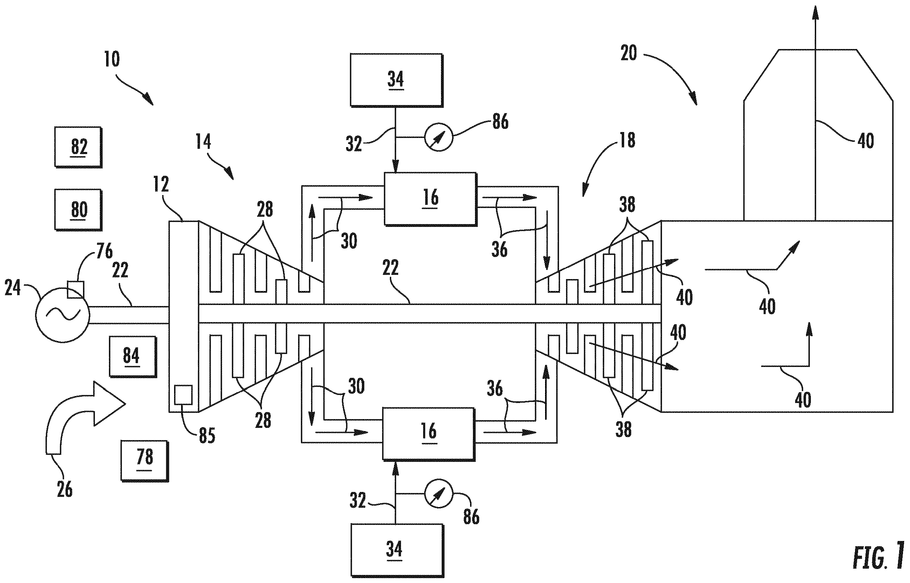

Now referring to the drawings, wherein identical numerals indicate the same elements throughout the figures, FIG. 1 schematically illustrates an exemplary gas turbine engine 10. As depicted therein, the gas turbine engine 10 includes an inlet section 12, a compressor 14, one or more combustors 16, a turbine 18, and an exhaust section 20. The compressor 14 and the turbine 18 may be coupled by a shaft 22, which may be a single shaft or a plurality of shaft segments coupled together. The shaft 22 may also couple the turbine 18 to a generator 24.

During operation, the gas turbine engine 10 produces mechanical rotational energy, which may be used to drive the generator 24. More specifically, air 26 enters the inlet section 12 of the gas turbine engine 10. From the inlet section 12, the air 26 flows into the compressor 14, where one or more rows of compressor rotor blades 28 progressively compress the air 26 to provide compressed air 30 to each of the combustors 16. The compressed air 30 in the combustors 16 mixes with a fuel 32 (e.g., natural gas) supplied by a fuel supply 34. The resulting fuel-air mixture burns in the combustors 16 to produce high temperature and high pressure combustion gases 36. From the combustors 16, the combustion gases 36 flow through the turbine 18, where one or more rows of turbine rotor blades 38 extract kinetic and/or thermal energy therefrom. This energy extraction rotates the shaft 22, thereby creating mechanical rotational energy for powering the compressor 14 and/or the generator 24. The combustion gases 36 exit the gas turbine engine 10 through the exhaust section 20 as exhaust gases 40.

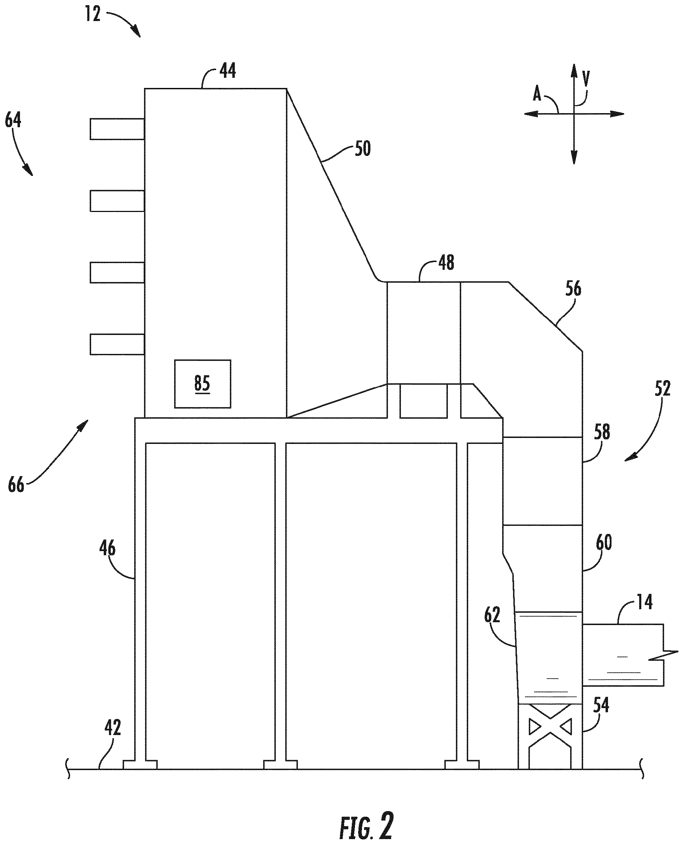

FIG. 2 illustrates an exemplary embodiment of the inlet section 12. As shown, the inlet section 12 couples to a base surface 42, which may be the ground, a power plant floor, a building roof, or any other suitable equipment baseline. In this respect, the inlet section 12 defines a vertical direction V and an axial direction A. Specifically, the vertical direction V generally extends orthogonal to the base surface 42. The axial direction A generally extends orthogonal to the vertical direction V and parallel to the base surface 42.

The inlet section 12 may include a filter housing 44. In particular, the filter housing 44 may include various filters, screens, cooling coils, moisture separators, evaporative coolers, heating systems, and/or other devices to purify and otherwise condition the air 26 entering the gas turbine engine 10. The filter housing 44 may be positioned vertically above the base surface 42 to reduce the amount of dust or other particles that enter the inlet section 12 during operation of the gas turbine engine 10. In this respect, a first support structure 46 may support the filter housing 44 above the base surface 42.

In the embodiment shown in FIG. 2, the inlet section 12 may also include a silencer 48 positioned downstream of the filter housing 44. The silencer 48 may include various baffles, panels, acoustic insulation packets, and/or other devices for attenuating the intensity of at least a portion of the sound generated by the compressor 14. A transition piece 50 may couple the silencer 48 and the filter housing 44. Some embodiments of the inlet section 12 may not include the silencer 44.

The inlet section 12 may further include a duct 52 that fluidly couples the filter housing 44 or the silencer 48 to the compressor 14. In this respect, the duct 52 receives the air 26 from the silencer 48 and/or the filter housing 44 and supplies the air 26 to the compressor 14. A second support structure 54 may support the duct 52 above the base surface 42. As shown, the second support structure 54 is separate from the first support structure 46. Although, the first and second support structures 46, 54 may be portions of a single structure in other embodiments. The duct 52 may include various duct segments, such as an elbow segment 56, a vertically-extending segment 58, a transition segment 60, and an inlet plenum segment 62. In alternate embodiments, however, the duct 52 may include any suitable type and/or number of duct segments. In this respect, the duct 52 may have any suitable configuration extending from the filter housing 44 or the silencer 48 to the compressor 14.

The inlet section 12 also includes a damper 64, which may be operable to control the flow of the air 26 entering the inlet section 12 of the gas turbine engine 10. In this respect, the damper 64 may be positioned at an entrance 66 of the inlet section 12, such as at an axially upstream end of the filter housing 44. In alternate embodiments, however, the damper 64 may be positioned in other suitable locations within the inlet section 12.

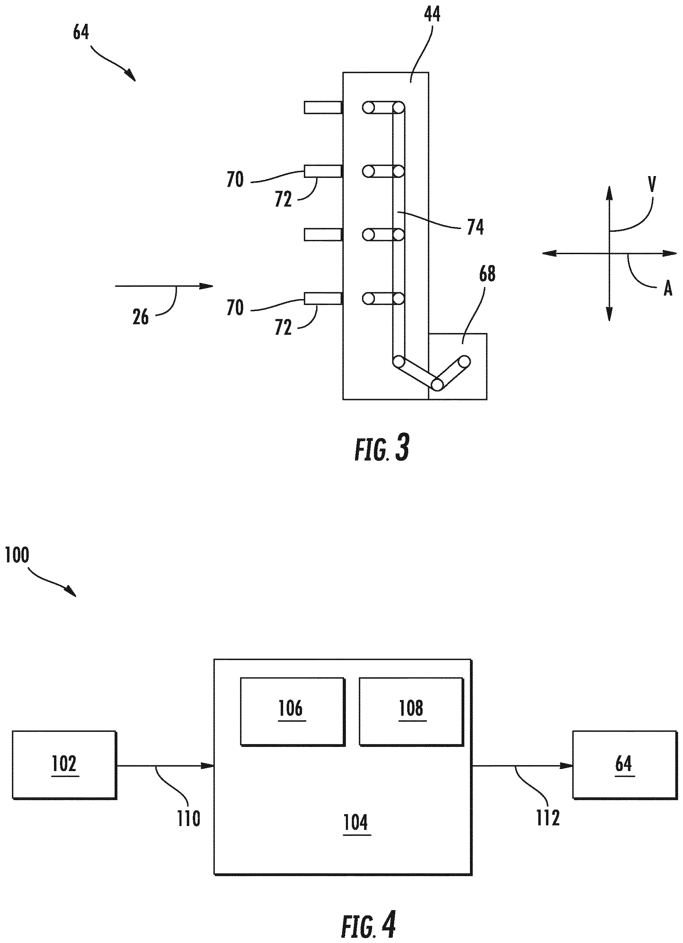

As shown in FIG. 3, the damper 64 includes an actuator 68 and one or more adjustable restrictions 70. In particular, the actuator 68 moves the restrictions 70 between two or more positions. Any suitable combination of gears, sprockets, chains, linkages, or other components may transmit motion from the actuator 68 to the restrictions 70. The restrictions 68 may adjust the flow of the air 26 entering the inlet section 12 based on the position thereof. For example, the restrictions 68 may adjust the pressure drop, flow direction, or other characteristics of the air 26. In this respect, the restrictions 70 may be impermeable to air and other fluids. As will be discussed in greater detail below, the flow of the air 26 into the gas turbine engine 10 may be regulated based on the position of the restrictions 70.

In the exemplary embodiment shown in FIG. 3, the restrictions 70 of the damper 64 are a plurality of louvers 72. In this respect, the actuator 68 adjusts the angular orientation of the louvers 72. As shown, a linkage 74 couples the actuator 68 (e.g., a pneumatic or hydraulic cylinder, an electric motor, etc.) to each of the louvers 72. During operation of the damper 64, the actuator 68 moves the various links of the linkage 74 to rotate the louvers 72. The louvers 72 may have a flat plate-like shape, airfoil-like shape, or other suitable shape or configuration. In alternate embodiments, the restrictions 70 may be guillotine doors, diverters, butterfly valves, poppets, irising orifices, or any other suitable type of restriction. Furthermore, the damper 64 may be any suitable structure or device that may adjustably control the flow of the air 26 into the gas turbine engine 10.

Referring again to FIG. 1, the gas turbine engine 10 may include various sensors. As shown, for example, the gas turbine engine 10 may include a load sensor 76, a temperature sensor 78, a relative humidity sensor 80, a precipitation sensor 82, a particulate sensor 84, a filter element differential pressure sensor 85, and a fuel flow sensor 66. In alternate embodiments, however, the gas turbine engine 10 may include only some of the sensors 76, 78, 80, 82, 84, 85, 86 or none of the sensors 76, 78, 80, 82, 84, 85, 86. Furthermore, the gas turbine engine 10 may include other sensors in addition to or lieu of the sensors 76, 78, 80, 82, 84, 85, 86.

The load sensor 76 that detects a load on the gas turbine engine 10. In the embodiment shown in FIG. 1, the load on the gas turbine engine 10 is the generator 24. In this respect, the load sensor 76 may be operatively associated with the generator 24. As such, the load sensor 76 may be an ammeter that detects the amount of electricity produced by the generator 24. In alternate embodiments, the load sensor 76 may be operatively associated with the shaft 22. In this respect, the load sensor 76 may be a Hall Effect sensor that detects a rotational speed of the shaft 22. The rotational speed of the shaft 22 maybe used to determine the load of the gas turbine engine 10. Nevertheless, the load sensor 76 may be any suitable sensor for detecting the load on the gas turbine engine 10.

The temperature sensor 78 detects a temperature of the air 26 entering the inlet section 12. In this respect, the temperature sensor 78 is exposed to the air 26 entering the inlet section 12. The temperature sensor 78 may be a thermistor, thermocouple, or any other suitable type of temperature sensor.

The relative humidity sensor 80 detects a relative humidity of the air 26 entering the inlet section 12. In this respect, relative humidity sensor 80 exposed to the air 26 entering the inlet section 12. The relative humidity sensor 80 may be a capacitive relative humidity sensor, a resistive relative humidity sensor, a thermal conductivity relative humidity sensor, or any other suitable type of relative humidity sensor.

The precipitation sensor 82 detects the presence of precipitation (e.g., rain, snow, etc.) proximate to the gas turbine engine 10. In this respect, the precipitation sensor 82 is positioned external to the gas turbine engine 10 and is exposed to ambient conditions. The precipitation sensor 82 may be a tipping bucket rain gauge, a conductivity precipitation sensor, a hygroscopic disk precipitation sensor, or any other suitable type of precipitation sensor.

The particulate sensor 84 detects the presence and/or amount of particulates (e.g., dust) in the air 26 entering the inlet section 12. In this respect, particulate sensor 84 is exposed to the air 26 entering the inlet section 12. The relative particulate sensor 84 may be an optical particulate sensor or any other suitable type of particulate sensor.

The filter element differential pressure sensor 85 detects a difference between the pressure of the air 26 upstream of the filter elements in the inlet section 12 and the pressure of the air 26 downstream of the filter elements. In this respect, the filter element differential pressure sensor 85 is operably coupled to the inlet section 12. In particular, the filter element differential pressure sensor 85 may be position within the filter housing 44 such that it is exposed to the air 26 both upstream of the filter element and downstream of the filter element. The filter element differential pressure sensor 85 may be a pneumatic differential pressure transmitter, an electronic differential pressure transmitter, or any other suitable type of differential pressure sensor.

The fuel flow sensor 86 detects a flow rate or pressure of the fuel 32 flowing from the fuel supply 34 to the combustors 16. As shown in FIG. 1, the fuel flow sensor 86 is operatively associated with and in fluid communication with the fuel 32 flowing to the combustors 16. For example, the fuel flow sensor 86 may be an orifice meter, a turbine flowmeter, a vortex flowmeter, or any other suitable type of fuel flow sensor.

FIG. 4 illustrates a system 100 for regulating the flow of the air 26 into the gas turbine engine 10 in accordance with embodiments of the present disclosure. As will be discussed in greater detail below, the system 100 controls the position of the restrictions 70 of the damper 64 to regulate the flow of the air 26 based on a current operating condition of the gas turbine engine 10.

As shown, the system 100 may include a sensor 102 for detecting an operating parameter of the gas turbine engine 10. The operating parameter may be associated with or is indicative of the current operating condition of the gas turbine engine 10. For example, the operating parameter may be the load on the gas turbine engine 10, the temperature of the air 26, the relative humidity of the air 26, the presence of precipitation, the presence or amount of particulates in the air 26, the filter element different pressure of the air 26, or the flow rate or pressure of the fuel 32. In this respect, the sensor 102 may correspond to the load sensor 76, the temperature sensor 78, the relative humidity sensor 80, the precipitation sensor 82, the particulate sensor 84, filter element differential pressure sensor 85, or the fuel flow sensor 86. Although only one sensor 102 is shown in FIG. 4, the system 100 may include more sensors. In alternate embodiments, the sensor 102 may correspond to sensors not shown in FIG. 1. Furthermore, the operating parameter may be any suitable parameter that corresponds to a current condition within the gas turbine engine 10 or an environmental condition experienced by gas turbine engine 10.

The system 100 also includes a controller 104 communicatively coupled to one or more components of the system 100 and/or the gas turbine engine 10, such as the sensor 102 and the damper 64. The controller 104 may also be communicatively coupled to any other sensors included in the system 100. In certain embodiments, the controller 104 may correspond to a turbine controller (not shown) of the gas turbine engine 10. Alternately, the controller 104 maybe a separate processing device of the gas turbine engine 10 in addition to the turbine controller.

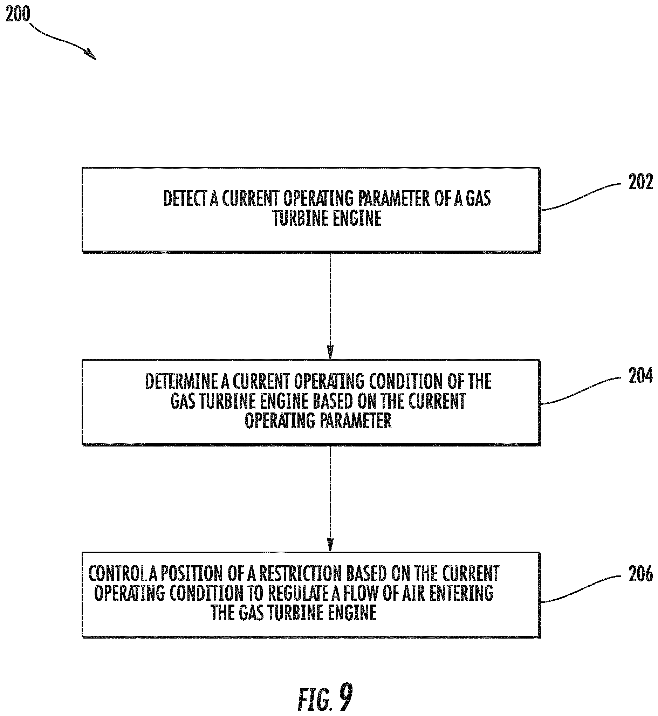

In general, the controller 104 may comprise any suitable processor-based device known in the art, such as a computing device or any suitable combination of computing devices. In this respect, the controller 104 may include one or more processor(s) 106 and associated memory device(s) 108 configured to perform a variety of computer-implemented functions. As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 108 of the controller 104 may generally comprise memory element(s) including computer readable medium (e.g., random access memory (RAM)), computer readable nonvolatile medium (e.g., a flash memory), a floppy disk, a compact disc-read only memory (CD-ROM), a magneto-optical disk (MOD), a digital versatile disc (DVD) and/or other suitable memory elements. Such memory device(s) 108 may generally be configured to store suitable computer-readable instructions that, when executed by the processor(s) 106, cause the controller 104 to perform various computer-implemented functions, such as one or more aspects of the method 200 described below with reference to FIG. 9. In addition, the controller 104 may also include various other suitable components, such as a communications circuit or module, one or more input/output channels, a data/control bus, and/or the like.

As indicated above, the controller 104 is communicatively coupled to the sensor 102, e.g., via a wired or wireless connection. In this respect, the sensor 102 may transmit measurement signals 110 associated with the operating parameter to the controller 104. The controller 104 may then be configured to determine the current operating condition of the gas turbine engine 10 based on the measurement signals 110 received from the sensor 102. For example, the controller 104 may include a look-up table, suitable mathematical formula, or other logic stored within its memory 108 that correlates the operating parameter measurements to the current operating condition of the gas turbine engine 10. In some embodiments, the current operating condition of the gas turbine engine 10 may be based on multiple operating parameters in embodiments of the system 100 having multiple sensors. In further embodiments, the controller 104 may also receive the current operating condition of the gas turbine engine 10 based on user-inputted settings or signals received from a user interface (not shown) or other user controls.

The controller 104 may also be communicatively coupled to the damper 64, e.g., via a wired or wireless connection. In this respect, the controller 104 may transmit control signals 112 to the damper 64. The control signals 112 indicate the position to which the actuator 68 should move the restrictions 70. As will be discussed in greater detail below, the controller 104 may generate the control signals 112 based on the current operating condition of the gas turbine engine 10.

The controller 104 is configured to control the position of the restrictions 70 to regulate the flow of the air 26 into the inlet section 12 based on the current operating condition of the gas turbine engine 10. For example, upon determining the current operating condition, the controller 104 may be configured to compare the current operating condition to a previous operating condition (i.e., the operating condition of the gas turbine engine 10 before the current operating condition was determined). When the current operating condition is different than the previous operating condition, the characteristics of the air 26 entering the inlet section 12 may be undesirable. In such instances, the controller 104 may be configured to control (e.g., via the control signals 112) the position of the restrictions 70 such that characteristics of the air 26 entering the inlet section 12 are modified. When the current operating condition is the same as the previous operating condition, the characteristics of the air 26 entering the inlet section 12 may be desirable. In such instances, the controller 104 may be configured to control (e.g., via the control signals 112) the position of the restrictions 70 such that characteristics of the air 26 entering the inlet section 12 remain the same.

The embodiment of the damper 64 shown in FIGS. 3 and 5-8, the restrictions 70 are a plurality of louvers 72. In this respect, the actuator 68 adjusts the angular orientation of the louvers 72 to modify various characteristics (e.g., pressure drop and flow direction) of the air 26 entering the inlet section 12. FIGS. 3 and 5-8 illustrate various angular orientations of the louvers 72 that may be associated with various operating conditions of the gas turbine engine 10. The controller 104 may be configured to move the louvers 72 into some, all, or none of the angular orientations described below. Furthermore, the controller 104 may be configured to move the louvers 72 into different angular orientations than the orientations described below.

FIG. 3 illustrates the louvers 72 in a normal operating position. As shown, the louvers 72 have a generally horizontal orientation in the normal operating position. That is, the forward end and the aft end of each louver 72 are positioned at the same vertical position above the base surface 42. This orientation of the louvers 72 may minimize the pressure drop occurring as the air 26 enters the inlet section 12, thereby maximizing the performance of the gas turbine engine 10.

The actuator 68 may move the louvers 72 into the normal operating position when the current operating condition of the gas turbine engine 10 is a normal operating condition. For example, the gas turbine engine 10 may be in the normal operating condition when the gas turbine engine 10 operates under a certain load (e.g., as measured by the load sensor 76) or consumes the fuel 32 as a certain rate (e.g., as measured by the fuel flow sensor 86). When the controller 104 determines that the current operating condition is the normal operating condition, the controller 104 may be configured to send the control signals 112 to the actuator 68. Based on the control signals 112, the actuator 68 may move the louvers 72 into the normal operating position (assuming the louvers 72 are not already in the normal operating position).

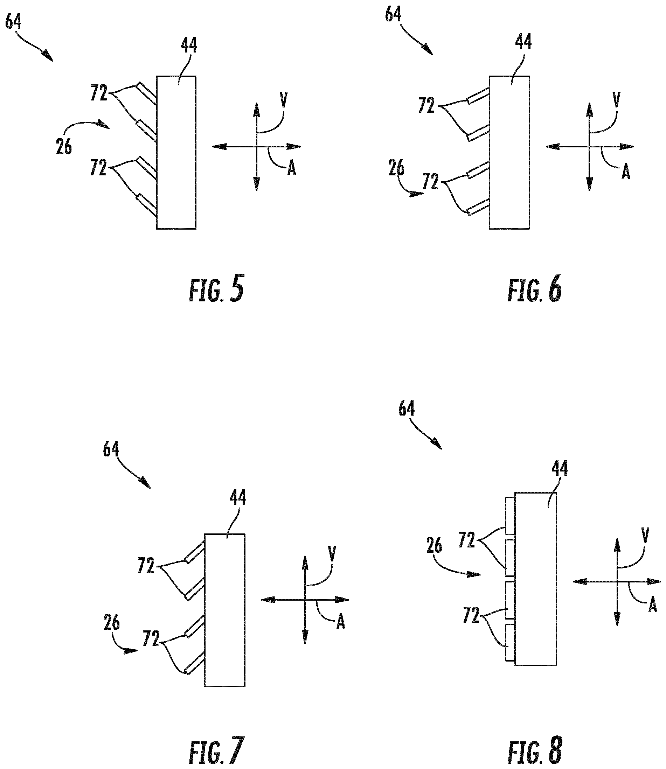

FIG. 5 illustrates the louvers 72 in a self-cleaning position. As shown, the louvers 72 have a generally upwardly angled orientation in the self-cleaning position. That is, the forward end of each louver 72 is positioned vertically above the aft end thereof. This orientation of the louvers 72 may create a down flow effect as the air 26 enters the inlet section 12. In this respect, the air 26 to flows diagonally downward through the filters (not shown) in the filter housing 44, thereby improving dust and particulate rejection by the filters.

The actuator 68 may move the louvers 72 into the self-cleaning position when the current operating condition of the gas turbine engine 10 is a self-cleaning operating condition. For example, the current operating condition may be the self-cleaning operating condition when the air 26 entering the inlet section 12 contains a certain amount of dust or other particulates (e.g., as detected by the particulate sensor 84 and/or filter element differential pressure sensor 85). When the controller 104 determines that the current operating condition is the self-cleaning operating position, the controller 104 may be configured to send the control signals 112 to the actuator 68. Based on the control signals 112, the actuator 68 may move the louvers 72 into the self-cleaning position (assuming the louvers 72 are not already in the self-cleaning position).

FIG. 6 illustrates the louvers 72 in a weather protection position. As shown, the louvers 72 have a generally downwardly angled orientation in the weather protection position. That is, the forward end of each louver 72 is positioned vertically below the aft end thereof. When in this orientation, the louvers 72 act as a weather hood to reduce the amount of rain, snow, and other precipitation present in the air 26 entering the inlet section 12. Reducing the amount of precipitation ingested by the gas turbine engine 10 lessens the icing and/or wetting of the various filters, screens, cooling coils, moisture separators, and/or other devices in the filter housing 44. Furthermore, the use of the weather protection position supplants the need for a permanent weather hood.

The actuator 68 may move the louvers 72 into the weather protection position when the current operating condition of the gas turbine engine 10 is a precipitation operating position. For example, the current operating condition may be the precipitation operating condition when precipitation is present proximate to the gas turbine engine 10 (e.g., as detected by the relative humidity sensor 80 and/or the precipitation sensor 82). When the controller 104 determines that the current operating condition is the precipitation operating condition, the controller 104 may be configured to send the control signals 112 to the actuator 68. Based on the control signals 112, the actuator 68 may move the louvers 72 into the weather protection position (assuming the louvers 72 are not already in the weather protection position). FIG. 7 illustrates the louvers 72 in a turndown position. As shown, the louvers 72 have a generally downwardly angled orientation in the turndown position. That is, the forward end of each louver 72 is positioned vertically below the aft end thereof. This orientation of the louvers 72 may create a pressure drop in the air 26 entering the inlet section 12, thereby reducing fuel consumption during periods of turndown (i.e., reduced power output by the gas turbine engine 10). The louvers 72 may have a plurality of turndown positions corresponding to different levels of turndown. In alternate embodiments, the louvers 72 may also have an upwardly angled orientation (i.e., the forward end of each louver 72 is positioned vertically above the aft end thereof) in the turndown position. An upwardly angle orientation may create a similar pressure drop to the downwardly angled orientation shown in FIG. 7. In this respect, both upwardly and downwardly angled orientations of the louvers 72 may create the necessary pressure drop for turndown.

The actuator 68 may move the louvers 72 into the turndown position when the current operating condition of the gas turbine engine 10 is a turndown operating position. For example, the current operating condition may be the turndown operating condition when the gas turbine engine 10 operates under a certain load (e.g., as measured by the load sensor 76) or consumes the fuel 32 as a certain rate (e.g., as measured by the fuel flow sensor 86). When the controller 104 determines that the current operating condition is the turndown operating condition, the controller 104 may be configured to send the control signals 112 to the actuator 68. Based on the control signals 112, the actuator 68 may move the louvers 72 into the turndown position (assuming the louvers 72 are not already in the turndown position).

FIG. 8 illustrates the louvers 72 in a shutdown position. As shown, the louvers 72 have a generally vertical orientation in the shutdown position. That is, the forward end and the aft end of each louver 72 are perpendicular to the base surface 42. This orientation of the louvers 72 may generally prevent the air 26 from entering the inlet section 12, thereby reducing condensation on and corrosion of the various components in the inlet section 12. Such condensation and corrosion is typically driven by a stack draft effect.

The actuator 68 may move the louvers 72 into the shutdown position when the current operating condition of the gas turbine engine 10 is a shutdown operating condition. For example, the current operating condition may be the shutdown operating condition when the gas turbine engine 10 operates under no load (e.g., as measured by the load sensor 76) or consumes no fuel 32 (e.g., as measured by the fuel flow sensor 86). When the controller 104 determines that the current operating condition the shutdown operating condition, the controller 104 may be configured to send the control signals 112 to the actuator 68. Based on the control signals 112, the actuator 68 may move the louvers 72 into the shutdown operating position (assuming the louvers 72 are not already in the shutdown position).

The controller 104 is configured to determine a controlling current operating condition when a plurality of current operating conditions exists. The controlling current operating condition is the current operating condition that the controller 104 uses to control the position of the restrictions 70 when multiple current operating conditions exist. In certain embodiments, the controller 104 may include a look-up table or other logic to determine the controlling current operating condition from the plurality of current operating conditions. For example, the gas turbine engine 10 may simultaneously experience the turndown and self-cleaning operating conditions. In this respect, the controller 104 may use the look-up table to determine that the current operating condition associated with turndown is the controlling current operating condition. In such instances, the controller 104 is configured to control the position of the restrictions based on the turndown operating condition and not the self-cleaning operating condition.

In some embodiments, the restrictions 70 may have a default position, such as the normal operating position shown in FIG. 3. The controller 104 may be configured to send control signals 112 to actuator 68 to move the restrictions 70 from the default position to one or more special positions when certain current operating conditions exist. For example, the special positions may include the self-cleaning position, the weather protection position, the turndown position, and the shutdown position. When the current operating condition corresponding to the special position ceases, the controller 104 may be configured to send control signals 112 to actuator 68 to move the restrictions 70 back to the default position. In this respect, such embodiments do not require detection of operating parameters associated with the default position.

FIG. 9 illustrates a method 200 for regulating the flow of the air 26 entering the gas turbine engine 10 in accordance with embodiments of the present disclosure.

In step 202, a current operating parameter of the gas turbine engine 10 may be detected. For example, the sensor 102 may detect the operating parameter and generate the measurement signals 110 indicative of the operating parameter. As mentioned above, the operating parameter may be the load on the gas turbine engine 10, the temperature of the air 26, the relative humidity of the air 26, the presence of precipitation, the presence or amount of particulates in the air 26, the filter element differential pressure of the air 26, or the flow rate or pressure of the fuel 32.

In step 204, the current operating condition of the gas turbine engine 10 is determined. For example, as indicated above, the controller 104 may be communicatively coupled to the sensor 102. As such, the measurement signals 110 transmitted from the sensor 102 may be received by the controller 104 for subsequent processing of the associated operating parameter measurements. In this respect, the controller 104 may use a look-up table or other logic to determine the current operating condition based on the operating parameter measurements. Furthermore, the controller 104 may determine the current operating condition based on the user input. When multiple current operating conditions exist, the controller 104 may determine a controlling current operating condition.

In step 206, the positions of the restrictions 70 are controlled based on a current operating condition or controlling current operating condition of the gas turbine engine 10 to regulate the flow of the air 26 entering the gas turbine engine 10. For example, the controller 104 may be configured to control the position of the restriction 70. More specifically, the controller 104 may send control signals 112 to the actuator 68 to adjust the position of the restriction 70. In this respect, the actuator 68 may move the restriction 70 to the normal operating position when the current operating condition is the normal operating condition. The actuator 68 may also move the restriction 70 to the self-cleaning position when the current operating condition is the self-cleaning operating condition. The actuator 68 may further move the restriction 70 to the weather protection position when the current operating condition is the precipitation operating condition. The actuator 68 may also move the restriction 70 to the turndown position when the current operating condition is the turndown operating condition. Furthermore, the actuator 68 may move the restriction 70 to the shutdown position when the current operating condition is the shutdown operating condition. In some embodiments, the actuator 68 may move the restriction 70 from a default operating position (e.g., the normal operating position) to special operating position (e.g. the turndown position).

As discussed in greater detail above, the system 100 and the method 200 disclosed herein adjustably regulate the flow of the air 26 entering the gas turbine engine 10 by adjusting the position of the restrictions 70. In this respect, the pressure drop, flow direction, and other characteristics of the air 26 flowing into the inlet section 12 may be optimized based on the current operating condition of the gas turbine engine 10. Conventional systems and methods, however, regulate the flow of air entering gas turbine engines using fixed (i.e., non-adjustable) components, such as weather hoods. As such, conventional systems and methods do not permit optimization of the flow of air entering the gas turbine engine based on the current operating condition thereof. This written description uses examples to disclose the technology, and also to enable any person skilled in the art to practice the technology, including making and using any devices or systems and performing any incorporated methods. The patentable scope of the technology is defined by the claims.

## Claims

1. A system (100) for regulating a flow of air (26) into a turbomachine (10), the system (100) comprising:
an inlet section (12) of the turbomachine (10);
a damper (64) including an actuator (68) and a restriction (70), the damper (64) being positioned within the inlet section (12) and operable to regulate the flow of air (26) into the turbomachine (10) based on a position of the restriction (70); and
a controller (104) communicatively coupled to the damper (64), the controller (104) being configured to control the position of the restriction (70) to regulate the flow of air (26) into the turbomachine (10) based on a current operating condition of the turbomachine (10); **characterised in that**:
the actuator (68) is configured to move the restriction (70) at least between a plurality of positions, wherein each position within said plurality of positions corresponds to a respective possible operating condition of the turbomachine (10); and
the controller (104) is configured to determine a controlling current operating condition when a plurality of current operating conditions exists; and
wherein the controller (104) is configured to control the position of the restriction (70) to correspond to the determined controlling current operating condition, in order to regulate the flow of air (26) into the turbomachine (10).

2. The system (100) of claim 1, wherein the controller (104) is configured to control the actuator (68) to move the restriction (70) to a normal operating position when the controlling current operating condition is a normal operating condition.

3. The system (100) of claim 1 or 2, wherein the controller (104) is configured to control the actuator (68) to move the restriction (70) to a self-cleaning position when the controlling current operating condition is a self-cleaning operating condition.

4. The system (100) of claim 1, 2 or 3, wherein the controller (104) is configured to control the actuator (68) to move the restriction (70) to a weather protection position when the controlling current operating condition is a precipitation operating condition.

5. The system (100) of claim 1, 2, 3 or 4, wherein the actuator (68) moves the restriction (70) to a turndown position when the controlling current operating condition is a turndown operating condition.

6. The system (100) of any preceding claim, wherein the controller (104) is configured to control the actuator (68) to move the restriction (70) to a shutdown position when the controlling current operating condition is a shutdown operating condition.

7. The system (100) of any preceding claim, further comprising:
a sensor (102) communicably coupled to the controller (104), the sensor (102) being operable to detect an operating parameter of the turbomachine (10) indicative of a current operating condition.

8. The system (100) of claim 7, wherein the controller (104) is configured to control the actuator (68) to move the restriction (70) from a default operating position to a special operating position based on the current operating condition.

9. The system (100) of claim 7, wherein the sensor (102) is a relative humidity sensor (80), a precipitation sensor (82), a temperature sensor (78), a filter element differential pressure sensor (85), or a particulate sensor (84).

10. The system (100) of any preceding claim, wherein the restriction (70) comprises a plurality of louvers (72).

11. The system (100) of any preceding claim, wherein the restriction (70) is impermeable.

12. A method (200) for regulating a flow of air (26) into a turbomachine (10), the method (200) comprising:
controlling (206), with a controller (104), a position of a restriction (70) of a damper (64) positioned within an inlet section (12) of the turbomachine (10) to regulate the flow of air (26) into the turbomachine (10) based on a current operating condition of the turbomachine (10), the damper (64) being communicatively coupled to the controller (104) and operable to regulate the flow of air (26) into the turbomachine (10) based on the position of the restriction (70); **characterised in that**:
the restriction (70) is moveable at least between a plurality of positions, wherein each position within said plurality of positions corresponds to a respective possible operating condition of the turbomachine (10); wherein the method comprises:
determining a controlling current operating condition when a plurality of current operating conditions exists; and
controlling, with the controller (104), the position of the restriction (70) to correspond to the determined controlling current operating condition, in order to regulate the flow of air (26) into the turbomachine (10).

13. The method (200) of claim 12, further comprising:
detecting (202), with a sensor (102) communicably coupled to the controller (104), an operating parameter of the turbomachine (10); and
determining (204), with the controller (104), a current operating condition based on the operating parameter.

14. The method (200) of claim 12 or 13, further comprising:
moving, with the actuator (68), the restriction (70) from a default operating position to a special operating position based on the controlling current operating condition.

## Patentansprüche

1. System (100) zum Regulieren eines Luftstroms (26) in eine Turbomaschine (10), das System (100) umfassend:
einen Einlassabschnitt (12) der Turbomaschine (10);
einen Dämpfer (64), der ein Stellglied (68) und eine Drossel (70) einschließt, wobei der Dämpfer (64) innerhalb des Einlassabschnitts (12) positioniert ist und so betrieben werden kann, dass er den Luftstrom (26) in die Turbomaschine (10) basierend auf einer Position der Drossel (70) reguliert; und
eine Steuerung (104), die mit dem Dämpfer (64) kommunikativ gekoppelt ist, wobei die Steuerung (104) so konfiguriert ist, dass sie die Position der Drossel (70) steuert, um den Luftstrom (26) in die Turbomaschine (10) basierend auf einem aktuellen Betriebszustand der Turbomaschine (10) zu regulieren;
**dadurch gekennzeichnet, dass:**
das Stellglied (68) so konfiguriert ist, dass es die Drossel (70) zumindest zwischen einer Vielzahl von Positionen bewegt, wobei jede Position innerhalb der Vielzahl von Positionen einem jeweiligen möglichen Betriebszustand der Turbomaschine (10) entspricht; und
die Steuerung (104) so konfiguriert ist, dass sie einen steuernden aktuellen Betriebszustand bestimmt, wenn eine Mehrzahl von aktuellen Betriebszuständen gegeben ist; und
wobei die Steuerung (104) so konfiguriert ist, dass sie die Position der Drossel (70) so steuert, dass sie dem bestimmten steuernden aktuellen Betriebszustand entspricht, um den Luftstrom (26) in die Turbomaschine (10) zu regulieren.

2. System (100) nach Anspruch 1, wobei die Steuerung (104) so konfiguriert ist, dass sie das Stellglied (68) so steuert, dass es die Drossel (70) in eine normale Betriebsposition bewegt, wenn der steuernde aktuelle Betriebszustand ein normaler Betriebszustand ist.

3. System (100) nach Anspruch 1 oder 2, wobei die Steuerung (104) so konfiguriert ist, dass sie das Stellglied (68) so steuert, dass es die Drossel (70) in eine Selbstreinigungsposition bewegt, wenn der steuernde aktuelle Betriebszustand ein Selbstreinigungsbetriebszustand ist.

4. System (100) nach Anspruch 1, 2 oder 3, wobei die Steuerung (104) so konfiguriert ist, dass sie das Stellglied (68) so steuert, dass es die Drossel (70) in eine Wetterschutzposition bewegt, wenn der steuernde aktuelle Betriebszustand ein Niederschlagsbetriebszustand ist.

5. System (100) nach Anspruch 1, 2, 3 oder 4, wobei das Stellglied (68) die Drossel (70) in eine Absenkposition bewegt, wenn der steuernde aktuelle Betriebszustand ein Absenkbetriebszustand ist.

6. System (100) nach einem der vorstehenden Ansprüche, wobei die Steuerung (104) so konfiguriert ist, dass sie das Stellglied (68) so steuert, dass es die Drossel (70) in eine Abschaltposition bewegt, wenn der steuernde aktuelle Betriebszustand ein Abschaltbetriebszustand ist.

7. System (100) nach einem der vorstehenden Ansprüche, ferner umfassend:
einen Sensor (102), der mit der Steuerung (104) kommunikativ gekoppelt ist, wobei der Sensor (102) betrieben werden kann, um einen Betriebsparameter der Turbomaschine (10) zu erfassen, der einen aktuellen Betriebszustand anzeigt.

8. System (100) nach Anspruch 7, wobei die Steuerung (104) so konfiguriert ist, dass sie das Stellglied (68) so steuert, dass es die Drossel (70) basierend auf dem aktuellen Betriebszustand von einer Standardbetriebsposition in eine Sonderbetriebsposition bewegt.

9. System (100) nach Anspruch 7, wobei der Sensor (102) ein Sensor für relative Feuchtigkeit (80), ein Niederschlagssensor (82), ein Temperatursensor (78), ein Filterelement-Differenzdrucksensor (85) oder ein Partikelsensor (84) ist.

10. System (100) nach einem der vorstehenden Ansprüche, wobei die Drossel (70) eine Vielzahl von Lamellen (72) umfasst.

11. System (100) nach einem der vorstehenden Ansprüche, wobei die Drossel (70) undurchlässig ist.

12. Verfahren (200) zum Regulieren eines Luftstroms (26) in eine Turbomaschine (10), das Verfahren (200) umfassend:
Steuern (206) einer Position einer Drossel (70) eines Dämpfers (64), der innerhalb eines Einlassabschnitts (12) der Turbomaschine (10) positioniert ist, mit einer Steuerung (104), um den Luftstrom (26) in die Turbomaschine (10) basierend auf einem aktuellen Betriebszustand der Turbomaschine (10) zu regulieren, wobei der Dämpfer (64) mit der Steuerung (104) kommunikativ gekoppelt ist und betrieben werden kann, um den Luftstrom (26) in die Turbomaschine (10) basierend auf der Position der Drossel (70) zu regulieren; **dadurch gekennzeichnet, dass:**
die Drossel (70) zumindest zwischen einer Vielzahl von Positionen beweglich ist, wobei jede Position innerhalb der Vielzahl von Positionen einem jeweiligen möglichen Betriebszustand der Turbomaschine (10) entspricht; wobei das Verfahren umfasst:
Bestimmen eines steuernden aktuellen Betriebszustands, wenn eine Vielzahl von aktuellen Betriebszuständen gegeben ist; und
Steuern der Position der Drossel (70) mit der Steuerung (104), um dem bestimmten steuernden aktuellen Betriebszustand zu entsprechen, um den Luftstrom (26) in die Turbomaschine (10) zu regulieren.

13. Verfahren (200) nach Anspruch 12, ferner umfassend:
Erfassen (202) eines Betriebsparameters der Turbomaschine (10) mit einem Sensor (102), der mit der Steuerung (104) kommunikativ gekoppelt ist; und
Bestimmen (204), mit der Steuerung (104), eines aktuellen Betriebszustands basierend auf dem Betriebsparameter.

14. Verfahren (200) nach Anspruch 12 oder 13, ferner umfassend:
Bewegen der Drossel (70) mit dem Stellglied (68) von einer Standardbetriebsposition in eine Sonderbetriebsposition basierend auf dem steuernden aktuellen Betriebszustand.

## Revendications

1. Système (100) pour la régulation d'un écoulement d'air (26) dans une turbomachine (10), le système (100) comprenant :
une section d'entrée (12) de la turbomachine (10) ;
un amortisseur (64) incluant un actionneur (68) et un étranglement (70), l'amortisseur (64) étant positionné au sein de la section d'entrée (12) et pouvant fonctionner pour réguler l'écoulement d'air (26) dans la turbomachine (10) en fonction d'une position de l'étranglement (70) ; et
un dispositif de commande (104) couplé de manière communicative à l'amortisseur (64), le dispositif de commande (104) étant configuré pour commander la position de l'étranglement (70) pour réguler l'écoulement d'air (26) dans la turbomachine (10) en fonction d'une condition de fonctionnement actuelle de la turbomachine (10) ; **caractérisé en ce que** :
l'actionneur (68) est configuré pour déplacer l'étranglement (70) au moins entre une pluralité de positions, dans lequel chaque position au sein de ladite pluralité de positions correspond à une condition de fonctionnement possible respective de la turbomachine (10) ; et
le dispositif de commande (104) est configuré pour déterminer une condition de fonctionnement actuelle de commande lorsqu'une pluralité de conditions de fonctionnement actuelles existe ; et
dans lequel le dispositif de commande (104) est configuré pour commander la position de l'étranglement (70) pour correspondre à la condition de fonctionnement actuelle de commande déterminée, afin de réguler l'écoulement d'air (26) dans la turbomachine (10).

2. Système (100) selon la revendication 1, dans lequel le dispositif de commande (104) est configuré pour commander l'actionneur (68) pour déplacer l'étranglement (70) vers une position de fonctionnement normale lorsque la condition de fonctionnement actuelle de commande est une condition de fonctionnement normale.

3. Système (100) selon la revendication 1 ou 2, dans lequel le dispositif de commande (104) est configuré pour commander l'actionneur (68) pour déplacer l'étranglement (70) vers une position d'autonettoyage lorsque la condition de fonctionnement actuelle de commande est une condition de fonctionnement d'autonettoyage.

4. Système (100) selon la revendication 1, 2 ou 3, dans lequel le dispositif de commande (104) est configuré pour commander l'actionneur (68) pour déplacer l'étranglement (70) vers une position anti-intempéries lorsque la condition de fonctionnement actuelle de commande est une condition de fonctionnement de précipitation.

5. Système (100) selon la revendication 1, 2, 3 ou 4, dans lequel l'actionneur (68) déplace l'étranglement (70) vers une position de débit moyen lorsque la condition de fonctionnement actuelle de commande est une condition de fonctionnement de débit moyen.

6. Système (100) selon une quelconque revendication précédente, dans lequel le dispositif de commande (104) est configuré pour commander l'actionneur (68) pour déplacer l'étranglement (70) vers une position d'arrêt lorsque la condition de fonctionnement actuelle de commande est une condition de fonctionnement d'arrêt.

7. Système (100) selon une quelconque revendication précédente, comprenant en outre :
un capteur (102) couplé de manière communicante au dispositif de commande (104), le capteur (102) pouvant fonctionner pour détecter un paramètre de fonctionnement de la turbomachine (10) indicatif d'une condition de fonctionnement actuelle.

8. Système (100) selon la revendication 7, dans lequel le dispositif de commande (104) est configuré pour commander l'actionneur (68) pour déplacer l'étranglement (70) d'une position de fonctionnement par défaut vers une position de fonctionnement spéciale en fonction de la condition de fonctionnement actuelle.

9. Système (100) selon la revendication 7, dans lequel le capteur (102) est un capteur d'humidité relative (80), un capteur de précipitation (82), un capteur de température (78), un capteur de pression différentielle d'élément filtrant (85), ou un capteur de particules (84).

10. Système (100) selon une quelconque revendication précédente, dans lequel l'étranglement (70) comprend une pluralité d'aérateurs (72).

11. Système (100) selon une quelconque revendication précédente, dans lequel l'étranglement (70) est imperméable.

12. Procédé (200) pour la régulation d'un écoulement d'air (26) dans une turbomachine (10), le procédé (200) comprenant :
la commande (206), avec un dispositif de commande (104), d'une position d'un étranglement (70) d'un amortisseur (64) positionné au sein d'une section d'entrée (12) de la turbomachine (10) pour réguler l'écoulement d'air (26) dans la turbomachine (10) en fonction d'une condition de fonctionnement actuelle de la turbomachine (10), l'amortisseur (64) étant couplé de manière communicative au dispositif de commande (104) et pouvant fonctionner pour réguler l'écoulement d'air (26) dans la turbomachine (10) en fonction de la position de l'étranglement (70) ; **caractérisé en ce que** :
l'étranglement (70) peut être déplacé au moins entre une pluralité de positions, dans lequel chaque position au sein de ladite pluralité de positions correspond à une condition de fonctionnement possible respective de la turbomachine (10) ; dans lequel le procédé comprend :
la détermination d'une condition de fonctionnement actuelle de commande lorsqu'une pluralité de conditions de fonctionnement actuelles existe ; et
la commande, avec le dispositif de commande (104), de la position de l'étranglement (70) pour correspondre à la condition de fonctionnement actuelle de commande déterminée, afin de réguler l'écoulement d'air (26) dans la turbomachine (10).

13. Procédé (200) selon la revendication 12, comprenant en outre :
la détection (202), avec un capteur (102) couplé de manière communicante au dispositif de commande (104), d'un paramètre de fonctionnement de la turbomachine (10) ; et
la détermination (204), avec le dispositif de commande (104), d'une condition de fonctionnement actuelle en fonction du paramètre de fonctionnement.

14. Procédé (200) selon la revendication 12 ou 13, comprenant en outre :
le déplacement, avec l'actionneur (68), de l'étranglement (70) d'une position de fonctionnement par défaut vers une position de fonctionnement spéciale en fonction de la condition de fonctionnement actuelle de commande.
